# EUROPEAN PATENT APPLICATION

(11) **EP 1 128 648 A2**
(43) Date of publication of application: **29.08.2001**
(21) Application number: 01104634.9
(22) Date of filing: 23.02.2001
(51) Int. Cl.: H04M 3/51

(54) **System and method for costumer interaction with call centers using wireless network technology**

(30) Priority: 24.02.2000 US 512095
(71) Applicant: Telefonaktiebolaget L M Ericsson (publ), 12625 Stockholm (SE)
(72) Inventor: Andersson, Jason, 13833 Älta (SE)
(74) Representative: Hammar, Ernst

(57) **Abstract**

Systems and methods for providing wireless device users interactivity with call centers and/or other e-commerce or IP-enabled Websites is described. An entrypoint configured for receiving data transmitted through a network from a wireless device receives transmission from a wireless device. A call center server provides interactivity between the wireless device and the call center server via the entrypoint. A request from a wireless device is received at an entrypoint configured for allowing wireless device communication with a call center server, and a connection is accepted and established through the entrypoint that acts as the interface to the call center server. A customer using the wireless device can continue to access the Website to browse information and/or receive continuous EWT information, and/or wait off-line. When an agent finally becomes available, the call center server notifies an agent and sets up the connection to the customer=s wireless device via the web server. The wireless customer engages in an interactive session with the call center.

## Description

### FIELD OF THE INVENTION

The present invention is generally related to call center communication technology and, more particularly, to methods and systems for providing interactivity with call centers (e.g., Internet-enabled businesses, E-Commerce portals) through wireless networks.

### BACKGROUND

The integration of call center technology and the Internet (e.g., Electronic Commerce) has enabled new types of companies to establish themselves in the marketplace. Interaction between customer and company, however, has generally been limited by (1) the privileges offered by the company, or (2) technology. For example, a wired customer currently can use the Internet to access a call center, a company having an Internet presence or an E-commerce portal. In a call center, a customer can request that the call center call back the customer by leaving a phone number. The call center eventually contacts the customer by phoning the number specified by the customer on the company web site.

Another scenario allows a wired customer to establish a Voice over IP call through a multimedia personal computer and talk to a call center over the Internet Protocol based infrastructure provided via the Internet or LAN/WAN. This mode of operation would be likened to a traditional telephone call, using a new mode and transport layer.

A third, less technical, scenario enables a wired or wireless customer only to send an email and/or voice mail to be received by an E-commerce enabled company, and eventually receive an email or email response from the company.

The problem is that none of these examples allow a wireless customer direct access to the call center or Internet-enabled company, except by voice. Another limitation of the prior methods is the time that is required to receive a response (email or voice).

New technologies are emerging that use a Wireless Application Protocol and other published standards to allow wireless devises direct access to a diverse set of access-points over networks such as the Internet. Full implementation scenarios for these protocols and standards, however, are apparently not fully defined. For example, although it is suggested that some customer specific solutions will use Acall me backs features, wireless call center interactivity has apparently not been taught or enabled.

What is needed are interactive communication methods and systems for use between wireless equipped customers and, for example, a call center.

### BRIEF SUMMARY OF THE INVENTION

One of the main benefits with wireless devices is constant availability and access. Wireless devices available in the marketplace today include mobile telephones (e.g., cellular phones), interactive pagers, and Personal Digital Assistants. With a Wireless Application Protocol enabled device and the teaching of this invention, it may now be possible to communicate with Wireless Application Protocol enabled web sites to gain information, purchase products and services, and ask for customer assistance. The benefit of such a scenario is that a customer should not only have to wait in a traditional queue, but may now establish an interactive session with, for example, company Internet sites, request access to a particular call center server that the customer wants a contact, and/or receive customer assistance on demand (e.g., while on hold and without having to wait for a call back) through, for example, queuing.

Aspects of the present invention employ wireless Internet capabilities to enable wireless device users to interact with, for example, call centers. It should be appreciated that reference to Acall center≅ will be made throughout this disclosure and should be taken by the reader merely exemplary of Internet-enabled commercial Websites, and should not be taken as a limitation on the application of this invention. ACall center≅ as used herein shall refer to any Internet-enabled companies engaged in electronic commerce (E-Commerce).

In a first aspect of the present invention, a wireless device user may place a request for communication directly with a server-based call center having wireless device communication capabilities (e.g., equipment and/or protocols), and obtain a response from the call center regarding service times and queue position. When the agent answers the contact established by the customer through the server, communication is transferred to traditional voice over the wireless device. The device can then be used to not only communicate by voice but also for the company to push information in graphical format to the wireless device.

Through implementation of other aspects of the present invention, a connection between a wireless device and a call center is established through a wireless network that is connected to the Internet. On the Enterprise side, a Web server is generally used as the entrypoint for the customer. The server also acts as the interface to a call center server. The call center server is generally responsible for handling contacts, and routing contacts based on predefined configuration schemas and controlling agents. A customer can continue to access a Website and receive continuous Estimated Waiting Time (EWT) information, or decide to wait off-line. In either mode, when an agent becomes available, the call center server notifies the agent and sets up the connection to the customer.

With another aspect of the present invention, a wireless device may interact with a call center web site to obtain information. After browsing/accessing information, the customer may place a request for communication directly with representative through the server-based call center, getting responses back on service times and position in a possible queue. When the agent answers the contact, it is transferred to traditional voice communication over the wireless device. The device can then be used to not only communicate by voice but also for the company to push information in graphical format to the wireless device.

### BRIEF DESCRIPTION OF THE DRAWINGS

**Figure 1** illustrates components generally used in a system environment for operation of the present invention and its methods;
**Figure 2** illustrates steps for initiating contact or connection between a wireless device and a call center and requesting communication; and
**Figure 3** illustrates steps for a wireless device engaging in a interactive session with a call center.

### DETAILED DESCRIPTION OF PREFERRED EMBODIMENTS

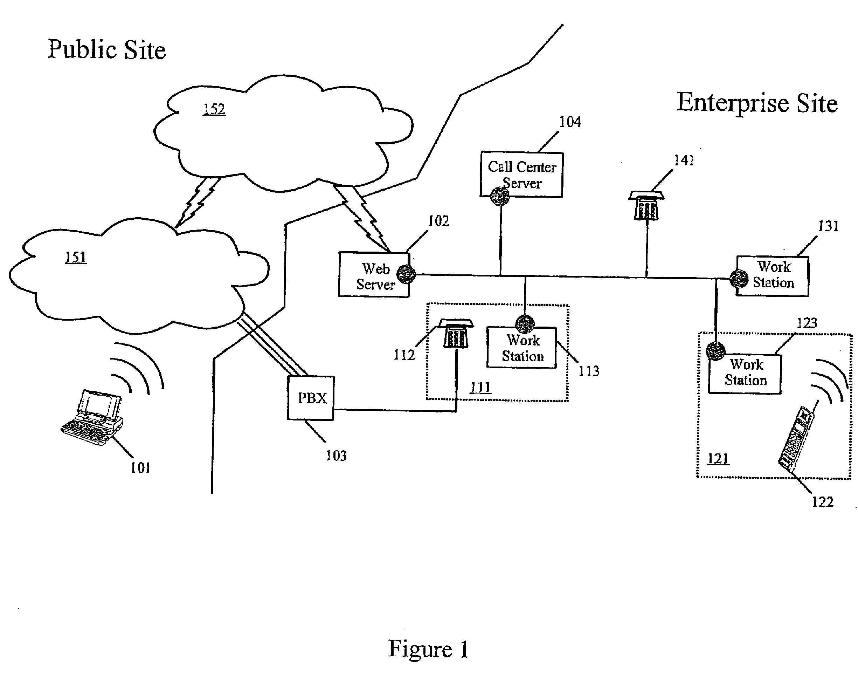

Referring to Figure 1, a scenario is presented that is intended as a general description of the usage of this invention and not as the only implementation or usage of it. There are generally eight main components used in the presented wireless interactive solution. A wireless device 101 with voice and data-communication capabilities runs Wireless Internet protocols and applications. The device 101 could be described as a PDA (personal Digital Assistant) but may also include interactive pagers, wireless phones and palm-type computers.

The entrypoint of the Enterprise side of the system is configured for receipt of data from the wireless device 101. The entrypoint (comprised of a server 102 and/or PBX 103) that is no longer only configured to receive voice, which would normally be received from the wireless device 101 through the traditional PBX 103 connected to the Public Switched Telephony Network (PSTN) 151. The new entrypoint into the company is through the wireless application protocol enabled web server 102, which is shown having a direct LAN connection with a call center server 104. During operation, the Web server 102 may also represent a Voice over IP (VoIP) gateway, but the VoIP gateway can also be located in many places, for example the PBX 103, the call center server 104, or as a standalone device.

A traditional PBX 103 provides voice-based enterprise communication devices 111 access to the PSTN 151. The typical Call Center desktop 111 generally includes a phone 112 connected to a wireline PBX 103 and a workstation 113. The workstation may also have Computer Telephony Integration (CTI) applications for computer application control of the telephone device 112. The workstation 113 typically is networked via a Local Area Network (LAN).

The typical wireless business desktop 121 includes a wireless telephone 122 connected with the PBX 103 through a set up of base stations (not shown) and a radio exchange devices (not shown, but generally known in the art) making up a wireless network 152. It will also be integrated with a workstation 123, the workstation most likely also be equipped with Computer Telephony Integration (CTI) applications and being LAN networked.

An IP-based workstation 131 having voice capabilities can generally be used, not only for data communication but, but also as a phone. Such an IP-based workstation 131 is networked via a LAN. An IP-based telephone 141 may be connected directly to the LAN, and generally be assigned to a particular workstation.

The call center server 104 general houses the logic for handling not only voice based communication (queuing, messages etc.), but also communication between the wireless application protocol enabled web server 102.

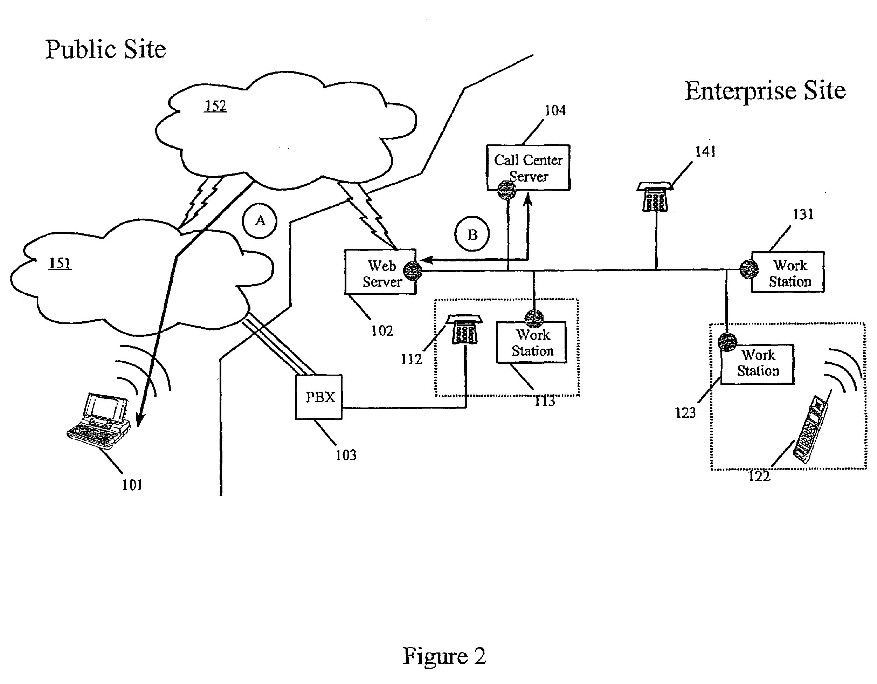

Referring to Figure 2, the typical first phase of the communication scenario of the present invention is exemplified. One of the benefits with a wireless device is constant availability and access. With a Wireless Application Protocol enabled device 101, it is possible to communicate with Wireless Application Protocol enabled web sites to gain information, purchase products and services, and also ask for help. The benefit of this is that the customer must not wait in a traditional queue, but can establish a request with the call center server 108 that he wants a contact. The connection is established (A) through a wireless network 152 that is connected to the Internet. On the Enterprise side the Web server 102 is the entrypoint that receives the customer=s request for connection. It acts (B) as the interface to the call center server. The call center server 108 is generally responsible for handling contacts, calculating Estimated Waiting Time (EWT), routing contact based on predefined configuration schemas, as well as managing agents who handle the contacts. Agents can be using any type of device explained in Figure 1, but should not be taken as a limitation.

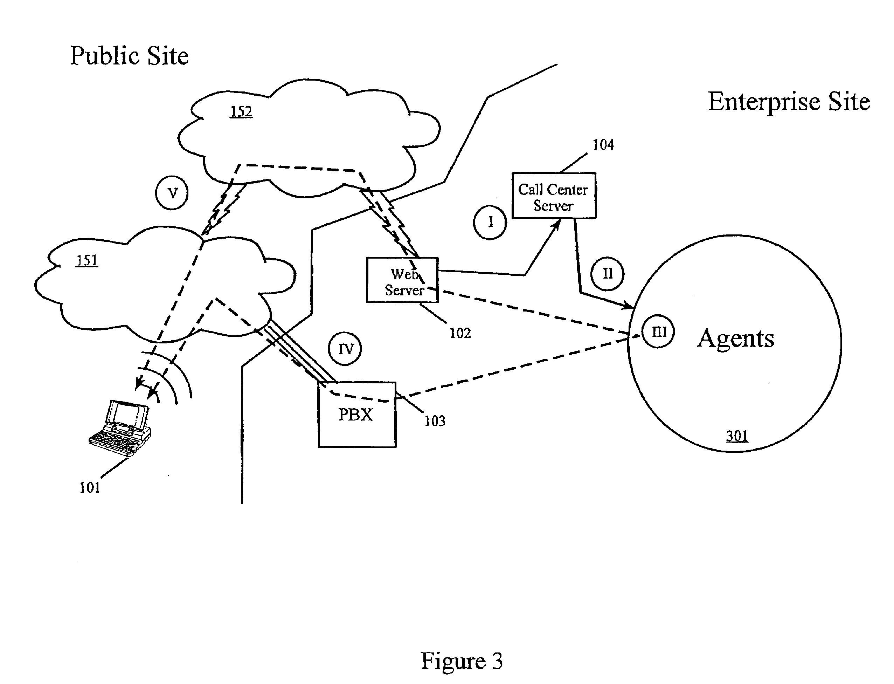

Referring to Figure 3, a second phase of the communication scenario in accordance with methods of the present invention entails setting up interaction between the wireless device 101 and the server 102 based on the request from the wireless application protocol enabled device 101. The wireless application protocol enabled web server 102 (I) sends a request to the call center server 104, which calculates an EWT and informs the web server 102, that in turn sends the information to the wireless application protocol enabled device 102. The customer can continue to access the Website, browse information and/or receive continuous EWT information, or decide to wait off-line. When an agent becomes available, the call center server 104 notifies (II) the agent 301 and sets up the connection to the customer 101. Depending on the agent device type (described above) the system will connect to the customer via a PBX 103 connections to the public network (IV) or through the (V) web server's IP gateway for Voice over IP communication to the device.

## Claims

1. A system for providing wireless device users interactivity with call centers, comprising:
an entrypoint configured for receiving data transmitted through a network from a wireless device; and
a call center server for providing interactivity between the wireless device and the call center server via the entrypoint.

2. The system of claim 1 wherein said entrypoint is configured with a wireless application protocol enabled web server having a direct LAN connection with the call center server.

3. The system of claim 2 wherein the Web server also provides VoIP gateway functionality for communication with telephony devices over IP networks.

4. The system of claim 2 further comprising a VoIP gateway in communication with the call center server.

5. The system of claim 4 further comprising a PBX for providing voice-based enterprise communication devices access to the public switched telephony network.

6. The system of claim 1 further comprising a Call Center desktop further including a telephony device connected to a wireline PBX and a workstation connected to a local area network.

7. The system of claim 6, wherein the workstation also includes Computer Telephony Integration (CTI) applications for computer application control of the telephony device.

8. The system of claim 6 wherein the desktop is a wireless business desktop including a wireless telephony device in wireless communication with a PBX and a workstation connected to a LAN and integrated with the wireless telephony device through the LAN and PBX.

9. The system of claim 8, wherein the workstation further includes Computer Telephony Integration (CTI) applications.

10. The system of claim 6, wherein the desktop is an IP-based workstation having Voice over IP capabilities for providing voice and data communication with the wireless device.

11. The invention of claim 10, wherein said workstation is networked via a LAN.

12. The invention of claim 11, further including an IP-based telephony device connected directly to the LAN and assigned to the particular workstation.

13. A method for providing wireless device users interactivity with a call center, comprising:
a request from a wireless device is received at an entrypoint configured for allowing wireless device communication with a call center server; and
a connection is accepted and established through the entrypoint and acts as the interface to the call center server.

14. The method of claim 13, wherein the call center server manages interactivity with the wireless device, calculates Estimated Waiting Time (EWT), and routes the wireless contact based on predefined configuration schemas.

15. The method of claim 14, wherein the call center server manages agents and assigns contacts.

16. The method of 13, further comprising:
the entrypoint is a wireless protocol enabled web server that supports an interactive session between the wireless device and the call center server;
the web server sends a request to the call center server 108 which calculates an EWT and informs the web server of the EWT; the web server sends the EWT information to the wireless device allowing a customer using the wireless device to continue to access the Website, browse information and/or receive continuous EWT information, or decide to wait off-line;
when an agent becomes available, the call center server notifies an agent and sets up a connection to the wireless device through the web server.

17. The method of claim 16, wherein the call center server may connect to an off-line customer via a PBX connections to the PSTN or through the web server via a wireless IP gateway for Voice over IP communication to the wireless device.

18. A method for setting up interaction between the wireless device and a call center server based on the request via a wireless application protocol enabled web server as an entrypoint, comprising the steps wherein:
a wireless application protocol enabled web server is contacted by a wireless device;
the wireless web server verifies the wireless device compatibility with the wireless web server communication protocols;
if the wireless device is compatible, the web server sends a request for interactivity with the wireless device to the call center server; and
the call center server accepts or denies an interactive session.

19. The method of claim 18, wherein the call center server accepts interactivity with the wireless device, further comprising:
the call center server calculates an EWT and informs the web server 102, that in turn sends the information to the wireless device;
a customer using the wireless device can continue to access the Website to browse information and/or receive continuous EWT information, or wait off-line; and
when an agent becomes available, the call center server notifies an agent and sets up the connection to the customer=s wireless device via the web server.

20. The method of claim 19, wherein the call center server may choose to connect to the off-line customer via a PBX connections to the PSTN or through a VoIP connection via an IP gateway.
